(19) Europäisches Patentamt
European Patent Office
Office européen des brevets

(11) **EP 1 418 788 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
*H04Q 9/00* *(2006.01)*    *G01D 4/00* *(2006.01)*

(21) Anmeldenummer: **03018199.4**

(22) Anmeldetag: **09.08.2003**

(54) **Verfahren und Vorrichtung zur Funkfernablesung von mehreren Verbrauchserfassungsgeräten**

Method and device for remote reading of multiple utility meters

Procédé et dispositif de lecture à distance de plusieurs compteurs de consommation

(84) Benannte Vertragsstaaten:
**AT CH DE LI**

(30) Priorität: **06.11.2002 DE 10251995**
**05.03.2003 DE 10309454**

(43) Veröffentlichungstag der Anmeldung:
**12.05.2004 Patentblatt 2004/20**

(73) Patentinhaber: **Techem Energy Services GmbH**
**65760 Eschborn (DE)**

(72) Erfinder: **Hansing, Martin**
**65931 Frankfurt am Main (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A1- 0 460 734     WO-A-03/006924**
**JP-A- 2000 286 989     US-A1- 2001 038 342**

**Beschreibung**

Die vorliegende Erfindung betrifft ein Verfahren zur Funkfernablesung von mehreren Verbrauchserfassungsgeräten gemäß dem Oberbegriff des Anspruchs 1, bei dem die erfassten Verbrauchswerte von den jeweiligen Verbrauchserfassungsgeräten ausgesendet und von einer mobilen Datenerfassungseinheit bei der Begehung eines Ablesegebietes, insbesondere eines Gebäudes, empfangen werden, sowie eine entsprechende Vorrichtung.

Funkbasierte Systeme zur elektronischen Verbrauchswerterfassung von Wärme, Wasser, Strom u. a. insbesondere in Gebäuden werden sich zukünftig immer mehr durchsetzen, weil die Funkablesung bequemer und einfacher ist als herkömmliche Ablesemethoden. Dabei kann häufig sogar ein Betreten der abzurechnenden Räume vermieden werden. Dies bietet den Bewohnern oder Nutzern solcher Abrechnungseinheiten zum einen den Vorteil, während der Ablesung nicht anwesend sein zu müssen, und zum anderen wird die Privatsphäre durch den Abrechnungsdienst nicht gestört. Für den Ableser ist bei der drahtlosen Fernablesung vorteilhaft, dass er seine Arbeit ohne Voranmeldung verrichten kann und manuelle Ablesefehler vermieden werden.

Heute übliche drahtlose Verbrauchserfassungssysteme, die prinzipiell auch in großen Gebäude einsetzbar sind, arbeiten mehrheitlich mit stationären, in den Gebäuden fest montierten Funkempfängern. Die Funkempfänger sind in der Regel öffentlich zugänglich (z. B. in Treppenhäusern) und bieten dem Ableser die Möglichkeit, die Verbrauchsdaten an zentralen Datensammelstellen abzurufen. Dies findet alles ohne Belästigung der Gebäudenutzer statt. Aus dem Bereich der Einfamilienhäuser und kleinerer Mehrfamilienhäuser sind auch Systeme bekannt, die per sogenanntem Drive-By oder Walk-By abgelesen werden können. Bei diesen Verfahren muss sogar das abzulesende Gebäude nicht betreten werden.

Aus der nachveröffentlichten WO 03/006924 A1 sind ein Verfahren und ein System zur Erfassung von Zählerstandsdaten von Verbrauchszählern bekannt, wobei während einer Datenerfassungstour neben den Zählerstandsdaten auch Identifikationsdaten jedes Verbrauchszählers übernommen werden. Zur Kontrolle der Vollständigkeit einer Ablesung mit einem mobilen Erfassungsgerät wird vorgeschlagen, in bestimmten Zeitintervallen die Identifikationsdaten des bzw. der betreffenden Verbrauchszähler zu einer zentralen Datenerfassungsstelle zu senden, um dort sofort die Vollständigkeit der Ablesung zu überprüfen und mögliche Auslassungen an das Erfassungsgerät zurückzumelden.

Die EP 0 460 734 A1 beschreibt autonomes Pulslese und -aufzeichnungssystem, bei dem von Verbrauchszählern ausgesendete Pulse in einer zentralen stationären Erfassungseinheit erfasst und von dort mittels einer Sendeeinheit auf Anfrage einer ggf. mobilen Empfangseinheit ausgesendet werden. Die ausgesendeten Daten werden durch die mobile Empfangseinheit erfasst, die den Ableser mittels eines angeschlossenen Computers nach dem erfolgreichen Ablesen einer Erfassungseinheit zu einer anderen Erfassungseinheit leitet.

Ein Nachteil von Systemen mit stationär im Gebäude montierten Funkempfängern liegt jedoch darin, dass die Systemkosten deutlich höher ausfallen als bei Systemen ohne stationären Empfänger. Dafür sind insbesondere zwei Faktoren ausschlaggebend. Erstens sind Funkempfänger verglichen mit den Endgeräten (Verbrauchserfassungsgeräten) relativ teuer und es werden gerade bei größeren Gebäuden mehrere Funkempfänger pro System benötigt, um die nötige Empfangssicherheit zu gewährleisten. Zweitens muss die Funkreichweite der Sender aufgrund der vorgegebenen Entfernung zu den fest installierten Empfängern deutlich höher sein als bei einem Walk-In-System, bei dem ein Ableser durch ein Ablesegebiet, bspw. ein Gebäude, geht, und sich mit einem mobilen Empfänger den Sendern soweit annähern kann, dass die Übertragung erfolgreich stattfindet. Zudem unterliegen die Funkreichweiten in Gebäuden starken Schwankungen, so dass eine ausreichende Sicherheit in der Sendeleistung eingehalten werden muss. Gerade bei batteriebetriebenen Geräten führt dies zu einer verminderten Lebensdauer der Batterie. Für bestimmte Funkstrecken kann der stationäre Empfänger zudem in einem "Funktoch" liegen. Für diesen Fall muss eine Umleitungskommunikation vorgesehen werden. Stationäre Systeme benötigen daher eine deutlich höhere Systemdynamik als Systeme mit mobilen Empfängern. Da der realisierbaren Empfängerempfindlichkeit technische und wirtschaftliche Grenzen gesetzt sind, können hohe Anforderungen an die Systemdynamik eine leistungsfähigere und damit aufwendigere Sendertechnik erfordern. Dies führt zu höheren Kosten des Verbrauchserfassungssystems.

Bei den bekannten Walk-By oder Drive-By-Verfahren wird ebenfalls eine hohe Funkreichweite benötigt, wenn man vermeiden will, das Gebäude betreten zu müssen. Dies wirkt sich nachteilig auf die Verbrauchserfassungsgeräte aus, für die eine hohe Sendeleistung erforderlich ist. Die Sendeleistung lässt sich aus zwei Gründen auch nicht beliebig an die Erfordernisse anpassen. Zum einen sind die geeigneten Frequenzbänder durch Zulassungsvorschriften in der maximalen Sendeleistung beschränkt. Zum anderen sind die drahtlosen Verbrauchserfassungsgeräte in der Regel batteriebetrieben, so dass die verfügbare Batteriekapazität die Sendeleistung und Sendehäufigkeit begrenzt. Ein eigenständiger Batteriewechsel durch den Nutzer ist bei Verbrauchserfassungsgeräten aus Gründen des Manipulationsschutzes nicht möglich. Ein regelmäßiger Batteriewechsel durch den Ablesedienst macht die Vorteile der Funkablesung (Schutz der Privatsphäre und Durchführung des Verfahrens bei Abwesenheit der Gebäudenutzer) zunichte. Um dies zu vermeiden, müssen funkfähige Verbrauchserfassungsgeräte so konfiguriert werden, dass sie über ihre gesamte Einsatzzeit von mehreren Jahren ohne Batteriewechsel betriebsbereit sind. Dies beschränkt die realisierbare Sendeleistung und Funkreichweite solcher Geräte. Beschränkte Funkreichweiten machen daher ein Walk-By- oder Drive-By-Verfahren insbesondere für große Gebäude ungeeignet.

Die vorliegende Erfindung betrifft drahtlose Verbrauchserfassungssysteme, die für ein sogenanntes Walk-In-Verfahren geeignet sind. Das Walk-In-Verfahren stützt sich auf Verbrauchserfassungsgeräte insbesondere mit einem Hochfrequenzsendeteil geringerer Funkreichweite. Der Ableser ist mit einem mobilen Funkempfänger und einer damit verbundenen mobilen Datenerfassungseinheit ausgestattet. Zur Erfassung der Verbrauchswerte durchläuft der Ableser die zugänglichen Bereiche des abzulesenden Gebäudes mit seiner Datenerfassungs-Funkempfänger-Kombination und sammelt per Funkempfang die Verbrauchswerte ein. Dabei kommt der Ableser den sendenden Endgeräten bei seiner Ablesetour an bestimmten Stellen soweit entgegen, dass auf eine hohe Funkreichweite (größer als 10 bis 15 Meter) verzichtet werden kann. Ein Betreten von Wohnungen ist dabei normalerweise nicht nötig, da bspw. während eines Rundgangs durch ein Treppenhaus immer wieder unterschiedliche Positionen erreicht werden, bei denen einzelne Sender von Verbrauchserfassungsgeräten empfangen werden können. In großen Bürogebäuden kann das Ablesen bspw. auch durch Begehen der Bürogänge erfolgen. Dadurch werden in dem Büro arbeitende Mitarbeiter nicht gestört. Diese Vorgehensweise ist insbesondere für sehr große Gebäude vorteilhaft, da die Funkreichweite keine einschränkende Größe mehr ist und zugleich eine unmittelbare Störung durch die Ablesung vermieden wird. Gerade in größeren und unübersichtlichen Gebäuden können von dem Ableser jedoch leicht einzelne Verbrauchswerterfassungsstellen bzw. Ablesepositionen vergessen werden. Wenn der Ableser dies am Ende seiner Begehung feststellt, muss er extra noch einmal zu den jeweiligen Verbrauchserfassungsgeräten bzw. in deren Funkreichweitenbereich gehen. Dies kostet viel Zeit und ist daher ineffektiv und teuer. Sollte das Fehlen einzelner Verbrauchswerte erst bei der Auswertung festgestellt werden, muss unter Umständen sogar eine gesonderte Zwischenablesung durchgeführt werden.

Aufgabe der Erfindung ist es, eine einfache, Walk-In-taugliche Möglichkeit zur drahtlosen Verbrauchserfassung anzugeben, bei der das Ablesen einzelner Verbrauchserfassungsgeräte vom Ableser nicht vergessen werden kann.

Diese Aufgabe wird bei einem Verfahren der eingangs genannten Art im Wesentlichen mit den Merkmalen des Anspruchs 1 gelöst. Dabei wird ein Ableser von der Datenerfassungseinheit anhand einer Soll-Senderliste mit der Position der abzulesenden Verbrauchserfassungsgeräte im Ablesegebiet programmgesteuert durch das Ablesegebiet geführt, wobei die Datenerfassungseinheit nach dem Empfang des Verbrauchswerts eines Verbrauchserfassungsgeräts unter Berücksichtigung der Soll-Senderliste die nächste Ableseposition ermittelt und anzeigt. So findet bereits bei dem Ablesen eine Überwachung der abgelesenen Geräte statt. Dabei leitet bzw. führt das Verbrauchserfassungssystem den Ableser mit seinem mobilen Funkempfänger programmgesteuert so durch das Gebäude, dass er alle sendenden Verbrauchserfassungsgeräte einfängt. Durch die programmgesteuerte Führung kann auch die Gesamtwegstrecke durch das Gebäude optimiert werden, um die Begehungszeit möglichst kurz zu halten.

Zur automatischen Ermittlung des aktuellen Standort des Ablesers im Ablesegebiet werden erfindungsgemäß die Positionen der zuletzt empfangenen Verbrauchswerterfassungsgeräte zur Standortbestimmung herangezogen. Zur Bestimmung eines wahrscheinlichen Aufenthaltsorts des Ablesers aus den Positionen der zuletzt empfangen Verbrauchserfassungsgeräte bzw. Sender bieten sich bspw. aus der Mechanik bekannte Verfahren zur geometrischen Schwerpunktbestimmung an. Dabei werden bevorzugt nur die Funktelegramme berücksichtigt, deren Empfang nicht länger als ein vorgegebener Zeitraum, bspw. eine Minute, zurückliegt. Damit wird ein großer Positionsfehler durch einen zwischenzeitlichen Standortwechsel des Ablesers vermieden.

In einer einfachen Ausgestaltung der Erfindung können alle abzulesenden Geräte in der Soll-Senderliste bereits in einer sinnvoll optimierten Ablesereihenfolge gelistet sein. Dann kann die Soll-Senderliste bei der Begehung des Ablesegebietes einfach in der gelisteten Reihenfolge abgearbeitet werden, indem nach dem Empfang des Verbrauchswertes eines Verbrauchserfassungsgerätes in der Anzeige der Datenerfassungseinheit das nächste abzulesende Gerät angezeigt wird. Dies kann bspw. durch Angabe einer Gerätenummer erfolgen, wobei der Ableser über einen Plan mit der Position der jeweiligen Geräte oder deren bevorzugter Ableseposition verfügt. Anstelle der oder zusätzlich zur Gerätenummer kann auch die nächste Ableseposition direkt als Begehungsanweisung angegeben werden, bspw. "Raum 370", "2. Stock Treppenabsatz" oder dgl.. Wenn sich der Ableser daraufhin an die angegebene Ableseposition begibt, erfasst das Verbrauchserfassungsgerät die Funktelegramme mit den Verbrauchswerten sämtlicher Verbrauchserfassungsgeräte, denen in der Soll-Senderliste diese Position zugewiesen ist. Sobald für diese Ableseposition alle Verbrauchswerte erfasst sind, wird die nächste Ableseposition vorgegeben.

In einer besonders bevorzugten Weiterentwicklung des Verfahrens hängt die Ermittlung der nächsten Ableseposition von dem aktuellen Standort des Ablesers im Ablesegebiet ab. Alternativ oder zusätzlich können erfindungsgemäß auch die Positionen der noch nicht abgelesenen Verbrauchserfassungsgeräte oder deren Sender berücksichtigt werden. Damit wird das Ableseverfahren flexibler und dynamischer und kann besonders gut an die tatsächliche Ablesesituation angepasst werden. Insbesondere ist das System dann in der Lage, bestimmte Ablesepositionen zu überspringen, wenn die entsprechenden Funktelegramme bereits empfangen wurden. Indem die Programmsteuerung neben der Verwaltung der genannten Listen auch die aktuelle Position des Ablesers im Gebäude nachhält und so den Standort des Ablesers berücksichtigt, kann die Gesamtwegstrecke der Begehung ständig aktualisiert und optimiert werden. Dies kann im einfachsten Fall durch manuelle Eingabe des Standorts an einem Bedienelement der Datenerfassungselnheit erfolgen.

Erfindungsgemäß ist bei der Bestimmung der aktuellen Position des Ablesers vorgesehen, dass aus der Empfangsfeldstärke der zuletzt empfangenen Verbrauchserfassungsgeräte bzw. Sender der aktuelle Standort des Ablesers im Ablesegebiet bestimmt wird. Dies lässt sich bspw. einfach durch kontinuierliches Ausmessen der Funkstrecken während der Gebäudebegehung erreichen, denn die Empfangsfeldstärke (RSSI-Wert) ist ein guter Indikator für die Nähe zu einem Sender. Steht dieser Wert beim Empfang einer Funkbotschaft zur Verfügung, kann er die Qualität der Positionsbestimmung erheblich steigern. Zusätzlich oder alternativ, falls der RSSI-Wert nicht zur Verfügung steht, kann auch die Empfangsrate der jeweiligen Verbrauchserfassungsgeräte zur Positionsbestimmung herangezogen werden. Dabei wird die Empfangsrate der Sender in Reichweite bewertet. Befindet sich der Ableser mit seinem Funkempfänger in einer bestimmten Etage, dann wird er häufiger und mehr Sender aus dieser Etage empfangen, als aus benachbarten Etagen, da Böden und Decken in Gebäuden in der Regel eine hohe Funkdämpfung aufweisen. Die Ergebnisse zahlreicher Funkstreckenmessungen in Gebäuden zeigen, dass sich zur Bestimmung des Empfängerstandorts Kriterien und Verfahren angeben lassen, die auch ohne gemessene Feldstärkeinformationen auskommen. Gewichtet man die Senderpositionen bspw. bei der Schwerpunktbestimmung jedoch geeignet mit ihrer Empfangsfeldstärke, dann wird das Ergebnis einer Schwerpunktbestimmung regelmäßig bessere Resultate liefern als bei der Verwendung ungewichteter Senderpositionen. Zusätzlich kann auch die Beschaffenheit des Gebäudes, bspw. eine hohe Funkabschirmung durch dicke Betonwände, berücksichtigt werden. Dies kann bspw. durch den Sender- bzw. Gerätepositionen zugeordnete Gewichtungsfaktoren erfolgen.

Auf die für die Standortbestimmung benötigten Informationen kann besonders einfach zugegriffen werden, wenn erfindungsgemäß eine Empfangsliste der zuletzt empfangenen Verbrauchserfassungsgeräte geführt wird, in welcher insbesondere der Empfangszeitpunkt, die Position des Verbrauchserfassungsgeräts und/oder die Empfangsfeldstärke eingetragen werden. Die Empfangsliste kann eine dynamische Liste der zuletzt empfangenen Funkbotschaften (Last-Recently-Received-Liste, kurz LRR-Liste) sein. Die LRR-Liste speichert dazu vorzugsweise zeitlich begrenzt (für einige Sekunden oder Minuten) von den zuletzt empfangenen Verbrauchserfassungsgeräten jeweils den Empfangszeitpunkt, die Montageorte (Einbaupositionen), falls verfügbar die Empfangsfeldstärke (bspw. den RSSI-Wert) sowie ggf. weitere Informationen.

Ein statistisches Verfahren zur Empfängerstandortbestimmung, wie es zuvor beschreiben wurde, funktioniert um so besser, je mehr Funkstrecken vorhanden sind, also insbesondere in großen Gebäuden mit vielen Sendern. Gerade dort ist auch die programmgesteuerte Nutzerführung besonders vorteilhaft einsetzbar. Da es einiger Erfahrung bedarf, um zu beurteilen, wann beispielsweise das Warten auf einen fehlenden Verbrauchswert eines Verbrauchserfassungsgeräts abgebrochen werden kann, führt das erfindungsgemäße Verfahren den Ableser ferner gezielt in die Nähe der Verbrauchserfassungsgeräte bzw. ihrer Sender, deren Verbrauchswerte noch nicht übertragen wurden. Bleibt der Empfang auch in einer sicheren Funkreichweite eines Senders aus, dann kann dass Verfahren die Wahrscheinlichkeit für einen Gerätedefekt abhängig von der Aufenthaltszeit in Empfangsreichweite ermitteln. Diagnostiziert das Verfahren einen wahrscheinlichen Gerätedefekt, kann es den Ableser auf kürzestem Wege in die Nähe des nächsten fehlenden Verbrauchserfassungsgeräts ohne Defekt schicken. Eine subjektive Beurteilung der Empfangswahrscheinlichkeit unterliegt dagegen menschlichen Fehleinschätzungen, würde lange Wartezeiten auf einzelne fehlende Sender nach sich ziehen und die Geschwindigkeitsvorteile der erfindungsgemäßen Walk-In-Ablesung reduzieren. Deswegen ist es gemäß der vorliegenden Erfindung besonders vorteilhaft, wenn jeweils eine Defektablaufzeit für jedes sich vorzugsweise in Empfangsreichweite befindende Verbrauchserfassungsgerät ermittelt wird, und nach Ablauf der Defektablaufzeit ohne Empfang das entsprechende Verbrauchserfassungsgerät bei der (weiteren) Führung des Ablesers durch das Ablesegebiet nicht mehr berücksichtigt wird. Die Defektablaufzeit kann bspw. aus einer typischen Defektausfallrate, dem Alter der Sender, der Empfangswahrscheinlichkeit und dem mittleren zeitlichen Abstand zwischen den Aussendungen abgeschätzt werden. Der Gerätedefekt kann dann bei der Auswertung der Ablesewerte festgestellt und im Rahmen einer Wartung kontrolliert und behoben werden.

Vorzugsweise werden in der Soll-Senderliste für jedes Verbrauchserfassungsgerät ein Empfangs-/Nichtempfangskennzeichen und/oder der Inhalt empfangener Funkbotschaften gespeichert. Ferner kann die Soll-Senderliste, die bspw. für ein Gebäude geführt wird, zusätzlich für jedes Endgerät (Verbrauchserfassungsgerät) ein eindeutiges Identifikationsmerkmal, den Montageort (die Einbauposition), die Defektablaufzeit oder sonstige Informationen enthalten. Empfangs-/Nichtempfangskennzeichen können beispielsweise über das Kriterium fehlender Inhalte im Feld gespeicherter Funkbotschaften realisiert werden.

Die Ablesezeiten während der Begehung lassen sich dadurch weiter verkürzen, dass die Sender der Verbrauchserfassungsgeräte die Verbrauchswerte zu den erwarteten Ablesezeitpunkten mit einer erhöhten Sendehäufigkeit aussenden. Eine Ablese der Verbrauchswerte erfolgt häufig zu Jahresanfang, so dass bspw. während des Januar die Sendehäufigkeit erhöht wird. Je nach Ablesezyklus kann die Sendehäufigkeit aber auch zu anderen Zeiten und für beliebige Zeiträume (bspw. auch mehrfach pro Jahr, wie einmal pro Quartal) erhöht werden.

Um die Bedienerfreundlichkeit und den Ablesekomfort weiter zu steigern, kann erfindungsgemäß zur Führung des Ablesers durch das Ablesegebiet das erfolgreiche Ablesen eines Verbrauchserfassungsgerätes, ein möglicher Gerätedefekt, eine Übersicht mit den Positionen der Verbrauchserfassungsgeräte bzw. deren Sender sowie ggf. der aktuelle Standort des Ablesers und/oder eine Begehungsanweisung angezeigt werden. Dafür bietet sich bspw. ein LCD-Display an, auf dem ein Plan des Ablesegebiets, sämtliche Ablesepositionen und Verbrauchserfassungsgeräte sowie der Standort des Ablesers dargestellt werden. Dabei kann bspw. durch verschiedene Farbdarstellungen oder andere Symbole zusätzlich angezeigt werden, welche Verbrauchserfassungsgeräte bzw. Ablesepositionen bereits abgearbeitet wurden und welche bei der Begehung noch angelaufen werden müssen. Durch geeignete Piktogramme kann ferner eine Begehungsanweisung eingeblendet werden. Schließlich können auch defekte Geräte besonders gekennzeichnet sein. Die entsprechenden Pläne des Ablesegebietes können dabei in einem Speicher der mobilen Datenerfassungseinheit hinterlegt sein und von dem Ableser beim Betreten des Ablesegebietes aufgerufen werden.

Die vorliegende Erfindung betrifft ferner eine Vorrichtung zur Funkfernablesung von mehreren Verbrauchserfassungsgeräten mit einer mobilen Datenerfassungseinheit, welche einen Funkempfänger, eine Steuereinheit mit Programmsteuerung und eine Anzeigeneinheit aufweist, wobei die Programmsteuerung zur Durchführung des zuvor beschriebenen Verfahrens eingerichtet ist.

Eine besonders vorteilhafte Datenerfassungseinrichtung weist zusätzlich eine Auswerteeinheit zur Bestimmung der Empfangsfeldstärke auf, um die gemessenen Empfangsfeldstärken, bspw. den RSSI-Wert, bei der Ermittlung der aktuellen Position des Ablesers mit heranzuziehen.

Die Steuereinheit kann einfacherweise ein mobiler Computer, insbesondere ein Notebook oder ein PDA, sein, an welchen ein mobiler Funkempfänger anschließbar ist. In der Steuereinheit ist ferner ein Datenspeicher vorgesehen, in dem eine Soll-Senderliste mit den abzulesenden Verbrauchserfassungsgeräten und eine Empfangsliste der zuletzt empfangenen Verbrauchserfassungsgeräte gespeichert sind.

Weiterbildungen, Vorteile und Anwendungsmöglichkeiten der Erfindung ergeben sich auch aus der nachfolgenden Beschreibung eines Ausführungsbeispiels und der Zeichnungen.

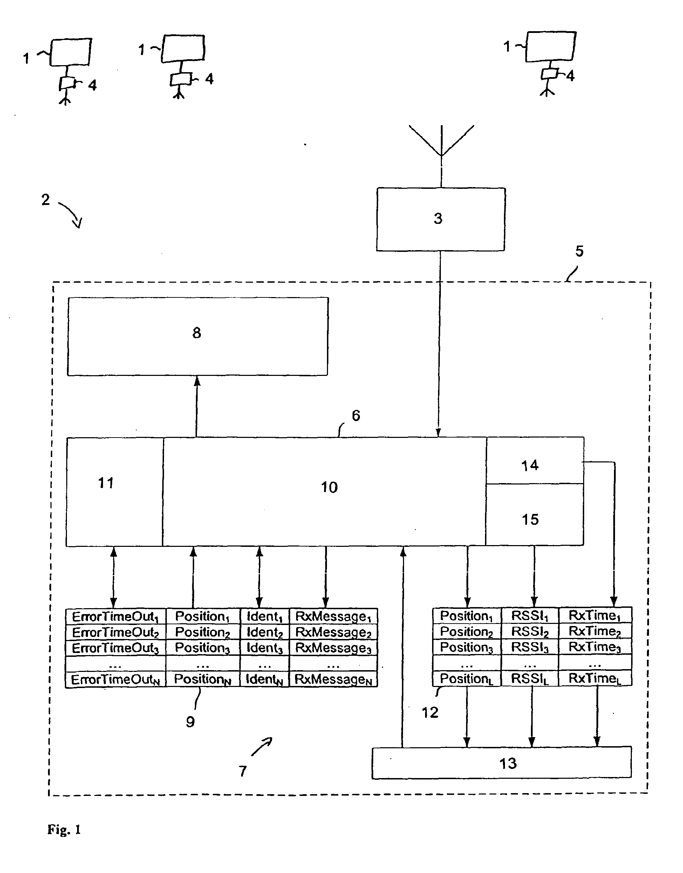

Die einzige Fig. 1 zeigt schematisch mehrere Verbrauchserfassungsgeräte 1, die durch eine mobile Datenerfassungseinheit 2 ausgelesen werden können, wenn sich der Funkempfänger 3 der Datenerfassungseinheit 2 in Empfangsreichweite der Sender 4 der jeweiligen Verbrauchserfassungsgeräte 1 befindet.

Dieses drahtlose Verbrauchserfassungssystem ermöglicht die Erfassung der Verbrauchswerte bei der Begehung eines Ablesegebietes, bspw. eines Gebäudes, mit einem geeigneten Funkempfänger 3 (Walk-In-Ablesung) durch Empfang von Funktelegrammen mit den Verbrauchswerten, die von den Verbrauchserfassungsgeräten 1 ausgesendet werden. Zum Aussenden der Funktelegramme mit den ermittelten Verbrauchswerten werden vorzugsweise Verbrauchserfassungsgeräte 1 mit im HF-Bereich arbeitenden Sendern 4 verwendet, die insbesondere zu den erwarteten Ablese-Zeitpunkten ihre Verbrauchswerte so häufig aussenden, dass eine zügige Begehung des Gebäudes durch den Ableser ermöglicht wird. Geeignete Sendehäufigkeiten liegen zu den Ablese-Zeitpunkten in der Größenordnung von sekündlichem Senden bis etwa minütlichem Senden. Während der übrigen Zeit kann die Aussendefrequenz zur Energieeinsparung deutlich reduziert werden. Die vorgenannten Zahlenbeispiele gelten für typische Anwendungsfälle in Bürogebäuden oder für Wohnungsanlagen. Je nach Ablesemuster und Zweck der Ablesung können diese Zeiten im Rahmen der vorliegenden Erfindung aber frei angepasst werden. Die genauen Sendezeitpunkte sind dabei für das Verfahren unerheblich. Die Sender 4 können beispielsweise in regelmäßigen, äquidistanten Zeitabständen oder zu zufälligen Sendezeitpunkten senden, wobei eine mittlere Sendehäufigkeit garantiert wird.

Die Funkbotschaften der Verbrauchserfassungsgeräte 1 enthalten ein eindeutiges Merkmal (z. B. eine Seriennummer), das den Sender 4 der Botschaft identifiziert. Jeder Sender 4 soll über dieses Identifikationsmerkmal eindeutig einem Verbrauchserfassungsgerät 1 und dessen Position zugeordnet werden können. Diese geräteindividuelle Zuordnung kann Teil einer Datenbank für das abzulesende Gebäude sein, die in der mobilen Datenerfassungseinheit 2 gespeichert ist.

Die mobile Datenerfassungseinheit 2 weist neben dem Funkempfänger 3 auch eine damit verbundene Steuereinheit 5 auf, welche über eine Programmsteuerung 6 mit Datenspeicher 7 und eine Anzeige 8 verfügt. Als Steuereinheit 5 kommen beispielsweise marktübliche Notebooks, PDAs oder Palmtops in Frage, die über eine geeignete Schnittstelle (Steckkarte, serielle Schnittstelle, USB, Bluetooth, IrDA, etc.) verfügen, um sie mit einem mobilen Funkempfänger 3 zu verbinden.

In der Programmsteuerung 6 der mobilen Datenerfassungseinheit 2 ist ein Verfahren zur Ableserführung implementiert, durch das der Ableser Begehungsanweisungen für das Ablesegebiet erhält. Dies kann bspw. ein Bürogebäude, ein Wohnhaus mit mehreren Wohnungen oder auch ein Komplex bestehend aus mehreren Gebäuden sein, deren Verbrauchswerte nacheinander durch Begehen abgelesen werden sollen. Ziel der Ableserführung ist es, sicherzustellen, dass der Ableser bei seinem Rundgang durch das Ablesegebiet keine Verbrauchserfassungsgeräte vergisst und einen optimalen Begehungsweg wählt. Gemäß einem weiteren, zusätzlichen Aspekt des implementierten Verfahrens soll dem Ableser die Entscheidung erleichtert werden, wann ein Verbrauchserfassungsgerät 1 bzw. der dazugehörige Sender 4 defekt ist, so dass es bei der Ablesung nicht mehr berücksichtigt wird.

Das Verfahren arbeitet dabei in folgenden Ablaufschritten, die durch eine in der Programmsteuerung 6 befindliche Ablaufsteuerung 10 für die Ableserführung initiiert werden:

A. Einlesen einer Soll-Senderliste 9 mit Identifikationsmerkmalen (Ident$_1$,..., Ident$_N$ ) für die jeweiligen Verbrauchserfassungsgeräte 1 und Montageorten (Einbaupositionen: Position$_1$,..., Position$_N$) der Sender 4 aus einem Datenspeicher 7 In der Soll-Senderliste 9, die bspw. separat für verschiedene Gebäude oder Ablesegebiete vorliegt, sind alle in diesem Ablesegebiet vorhandenen Verbrauchserfassungsgeräte 1 gelistet, die abgelesen werden sollen.

B. Initialisieren einer Senderdefekt-Ausfallzeitzählung 11
Die Senderdefekt-Ausfallzeitzählung 11 dient dazu, den Defekt eines Verbrauchserfassungsgerätes 1 bzw. des dazugehörigen Senders 4 festzustellen. Dafür werden in der Soll-Senderliste 9 Time-Out-Zeiten (ErrorTimeOut$_1$,..., ErrorTimeOut$_N$) für jedes Verbrauchserfassungsgerät 1 gespeichert. Wenn sich der Ableser für einen Zeitraum, der länger ist als die Time-Out-Zeit, in sicherer Empfangsreichweite eines Verbrauchserfassungsgerätes 1 befindet, ohne dass ein Funktelegramm von diesem Gerät ermittelt wurde, zeigt die Anzeige 8 der mobilen Datenerfassungseinheit 2 einen Gerätefehler an und gibt dem Ableser die nächste Ableseposition als Begehungsanweisung vor. Bei der Initialisierung der Defektausfallzeitzählung 11 werden bspw. bereits existierende Time-Out-Zeiten aus der Soll-Senderliste 9 ausgelesen oder neue Time-Out-Zeiten errechnet bzw. abgeschätzt.

C. Optionale Eingabe einer funktechnischen Beurteilung des Gebäudes
Diese Angaben können bspw. aus einer gebäudespezifischen Datenbank eingelesen werden und helfen der Programmsteuerung 6 bei der Interpretation der gewonnenen Daten. Es ist dabei in der Regel ausreichend, wenn die funktechnische Beurteilung in groben Kategorien erfolgt, bspw. durchlässig, normal, dämpfend.

D. Optionale Eingabe des Startorts für die Ablesung
Diese Angabe dient als Startwert für die Ermittlung des Standorts des Ablesers und erleichtert das Einmessen des Systems. Falls eine solche Vorgabe nicht erfolgt, können gebäudespezifische Annahmen gemacht werden, bspw. Erdgeschoss, Haupteingang des Gebäudes.

E. Initialisieren aller internen Zähler, Zustände und Zeitgeber
Dabei werden insbesondere die aus den Funktelegrammen extrahierten Verbrauchswerte, die in der Soll-Senderliste 9 gespeichert werden (RxMessage$_N$), gelöscht.

F. Löschen der Empfangsliste 12 der zuletzt empfangenen Sender 4
In der Liste 12 der zuletzt empfangenen Verbrauchserfassungsgeräte 1, die bspw. als dynamische LRR-Liste (Last Recently Received) geführt wird, werden Informationen zu den zuletzt empfangenen Sendern geführt, um daraus den Empfängerstandort zu ermitteln. Dies sind der Empfangszeitpunkt (RxTiMe$_L$), die Position des Senders 4 des Verbrauchserfassungsgeräts 1 (Position$_L$) und die jeweilige Empfangsfeldstärke (RSSI$_L$). Diese Liste 12 wird so geführt, dass das jeweils zuletzt empfangene Verbrauchserfassungsgerät 1 an der ersten Position der Liste 12 steht und die älteren Listeneinträge bei einem neuen Eintrag jeweils eine Position weiter geschoben werden, wobei der letzte Wert aus der Liste 12 herausfällt. Zusätzlich können auch Werte aus der Empfangsliste 12 gelöscht werden, die älter sind als eine vorgebbare Zeitspanne. Diese dynamische Listenführung hat sich für die Auswertung als vorteilhaft erwiesen.

G. Einschalten des Funkempfängers 3

H. Berechnen des nächsten Wegpunkts (Ableseposition) aus dem aktuellen Empfängerstandort und den Positionen noch fehlender Verbrauchserfassungsgeräte 1 aus der Soll-Senderliste 9
Aus einem fehlenden Eintrag für den Verbrauchswert in der Soll-Senderliste 9 (RxMessage hat noch keinen Eintrag) kann bspw. ermittelt werden, welche Verbrauchserfassungsgeräte noch nicht abgelesen sind. Alternativ dazu kann natürlich auch ein separates Empfangskennzeichen verwendet werden.
Mit dieser Information und dem aktuellen Empfängerstandort kann die Programmsteuerung 6 die optimale nächste Ableseposition ermitteln. Dabei kann auch berücksichtigt werden, dass der gesamte Begehungsweg optimalerweise besonders kurz gehalten werden soll. Gebäudespezifische Informationen zu den möglichen Wegen bei der Begehung mit Angaben zu den Entfernungen kann die Programmsteuerung 6 durch ihre Listen- und Speicherverwaltung erhalten, sofern entsprechende Gebäudedaten in einer Datenbank abgelegt sind. Insbesondere kann die Programmsteuerung 6 die tatsächlichen Begehungswege auch protokollieren, aufbereiten und in eine Datenbank einstellen. Dadurch aktualisiert sich die Programmsteuerung 6 bei jeder Begehung selbst und erweitert so ständig die potentiell möglichen Ablesewege, um immer flexibel den jeweils optimalen Begehungsweg auswählen zu können.

I. Generieren einer Begehungsanweisung aus den Ergebnissen des Berechnungsschritts H und Übermittlung der Anweisung an den Ableser.

Aus der nächsten günstigsten Ableseposition erzeugt die Programmsteuerung 6 eine Begehungsanweisung an den Ableser, die mittels der Anzeige 8 optisch und/oder akustisch angezeigt wird. Im einfachsten Fall kann dies die Benennung der nächsten Ableseposition sein. Komfortabler ist dagegen eine Darstellung auf einem Display, auf dem der Ableser bspw. in einem schematisierten Gebäudegrundriss seinen aktuellen Standort, die nächste Ableseposition und den Weg dorthin angezeigt bekommt. Ferner kann die Anzeigeneinheit 8 auch für Status- und Fehleranzeigen verwendet werden.

J. Empfang einer Funkbotschaft
Nachdem der Funkempfänger 3 eine Nachricht empfangen hat, wird diese einer Auswerteeinheit der Programmsteuerung 6 zugeführt.

K. Empfangszeitpunkt ($RxTime_L$) für die empfangene Botschaft bestimmen
Von einem Empfangszeitgeber 14 der Programmsteuerung 6 wird der Empfangszeitpunkt ermittelt.

L. Falls möglich, Messen der Empfangsfeldstärke ($RSSI\text{-}Wert_L$)
In einer Auswerteeinheit 15 der Programmsteuerung 6 wird vorzugsweise auch die Empfangsfeldstärke der eingegangenen Funkbotschaft ermittelt, die einen Hinweis auf die Entfernung zu dem aussendenden Sender 4 gibt. Dieser Wert kann bei der Standortbestimmung des Ablesers als Gewichtungsfaktor verwendet werden.

M. Bestimmung des Senderstandorts ($Position_L$) aus dem Eintrag des Montageorts in der Soll-Senderliste 9 über das Identifikationsmerkmal ($Ident_N$) aus der empfangenen Funkbotschaft

N. Eintragen der Senderposition ($Position_L$), der Empfangsfeldstärke ($RSSI_L$) und des Empfangszeitpunkts ($RxTime_L$) in die Liste 12 der zuletzt empfangenen Geräte 1 (LRR-Liste)

O. Bestimmen des aktuellen Empfängerstandorts (der Ableserposition im Gebäude oder Ablesegebiet) aus den Einträgen der LRR-Liste 12
Dazu wird in der Empfängerstandortbestimmung 13 der Programmsteuerung 6 aus der Empfangsliste 12 mittels einer mit der Empfangsfeldstärke ($RSSI_L$) gewichteten Schwerpunktermittlung aus den Positionen ($Position_L$) der zuletzt empfangenen Sender 4 der aktuelle Standort des Ablesers bestimmt. Dabei werden nur Einträge der Empfangsliste 12 verwendet, deren Empfangszeit ($RxTime_L$) nicht länger als ein bestimmter Zeitraum, bspw. ein oder zwei Minuten, zurückliegt. Damit sollen Ungenauigkeiten in der Standortbestimmung vermieden werden, die durch einen zwischenzeitlichen Standortwechsel des Ablesers hervorgerufen worden sind.

Q. Abspeichern der Dateninhalte der empfangenen Funkbotschaft (Funktelegramm) in der Soll-Senderliste 9 im Feld "RxMessage"

R. Falls erforderlich, Fortschreiben der Zeitzählung und Aktualisierung sämtliche Defektablaufzeiten (ErrorTimeOut) von allen noch nicht empfangenen Sendern 4 in Empfangsreichweite sowie ggf. Löschen von Einträgen aus der Empfangsliste 12 mit veraltetem Empfangszeitpunkt
Wenn für eine Ableseposition bestimmte Verbrauchserfassungsgeräte 1 noch nicht empfangen wurden, was bspw. über das Kriterium "RxMessage ohne Eintrag" festgestellt werden kann, wird die Zeitzählung für diese Ableseposition weitergeführt, damit nach Ablauf einer Defektablaufzeit ein Verbrauchserfassungsgerät 1 als nicht empfangbar (bspw. Eintrag "ERROR" für die RxMessage) erkannt und bei der weiteren Ableserführung nicht mehr berücksichtigt wird. Die jeweilige Empfangsreichweite wird aus Positionsangaben der Soll-Senderliste 9 und dem berechneten Empfängerstandort bestimmt.

S. Wiederholen der Schritte H bis R solange, bis alle Verbrauchserfassungsgeräte 1 aus der Soll-Senderliste 9 erfasst wurden, mit Ausnahme der Geräte 1, deren Defekt anzunehmen ist (Defektablaufzeit ErrorTimeOut ist überschritten).

T. Daten sichern und Ablese- und Fehlerreport generieren.

U. Ende des Ablesevorgangs für das Ablesegebiet bzw. Gebäude

Nach dem Ende des Ablesevorgangs verlässt der Ableser das Ablesegebiet bzw. Gebäude. Sobald er sich einem neuen Gebäude zuwendet, kann der Ableser das vorbeschriebene Verfahren für das neue Ablesegebiet erneut durchführen.

Nachfolgend wird noch detailliert beschrieben, wie ein möglicher Sendedefekt eines Verbrauchserfassungsgeräts 1 ermittelt wird. Dem vorgeschlagenen Verfahren zur Feststellung eines wahrscheinlichen Senderdefekts liegen folgende Annahmen zugrunde:

- Die Defektausfallrate $P_{ERR}$ der Sender 4, d. h. die Ausfälle pro Zeiteinheit $T_{ERR}$ (z. B. jährliche Ausfallrate), ist bekannt.

- Das Alter $T_{AGE}$ der Sender 4 oder die Zeitspanne $T_{LRO}$ (Last Read Out) seit der letzten erfolgreichen Funkablesung ist bekannt.

- Die Empfangswahrscheinlichkeit $P_{RX}$ für Sender 4 in Funkreichweite ist für eine gegebene Reichweite bekannt (ggf. abhängig vom Gebäudetyp).

- Die mittlere zeitliche Abstand $T_{TX}$ zwischen den Aussendungen der Funkbotschaften ist für den Zeitpunkt der Ablesung bekannt.

Aus diesen Parametern kann ein Wert für die min. Defektablaufzeit $T_{ETO}$ abgeschätzt werden.
Aus der Bedingung:

$$\left(1 - P_{RX}\right)^{T_{ETO}/T_{TX}} < 1 - \left(1 - P_{ERR}\right)^{T_{LRO}/T_{ERR}}$$

folgt für die Defektablaufzeit:

$$T_{ETO} > T_{TX} \cdot \frac{\log\left(1 - \left(1 - P_{ERR}\right)^{T_{LRO}/T_{ERR}}\right)}{\log\left(1 - P_{RX}\right)}$$

Für die erstmalige Ablesung kann der Wert für $T_{ETO}$ äquivalent abgeschätzt werden, indem die Zeit $T_{LRO}$ seit der letzten Ablesung durch das Alter TAGE der Sender 4 substituiert wird.
Ein Zahlenbeispiel soll die Zusammenhänge und Größenordnungen verdeutlichen:

| | |
|---|---|
| Die jährliche Defektausfallrate der Sender 4 sei bekannt und betrage | $P_{ERR}$ = 150 ppm |
| und beziehe sich demzufolge auf ein Zeitintervall von | $T_{ERR}$ = 12 Monate |
| Die Funkablesung soll regelmäßig einmal pro Quartal stattfinden | $T_{LRO}$ = 3 Monate |
| Die Empfangswahrscheinlichkeit betrage in abgesicherter Reichweite | $P_{RX}$ = 85% |
| Der mittlere zeitliche Abstand zwischen zwei Sendungen sei | $T_{TX}$ = 15 Sekunden |

Für diesen Fall berechnet sich die minimale Defektablaufzeit $T_{ETO}$ zu:

$$T_{ETO} > 15s \cdot \frac{\log\left(1 - \left(1 - \frac{150}{1000000}\right)^{3\,Monate/12\,Monate}\right)}{\log(1 - 0,85)} \approx 15s \cdot \frac{\log(0,0000375)}{\log(0,15)} \approx 80,6s$$

In diesem Beispiel kann der Defekt eines Senders 4 also frühestens nach einer Nichtempfangsdauer von ca. 81 Sekunden angenommen werden, während der sich der Ableser in sicherer Empfangsreichweite des Senders 4 befand. Für den errechneten Wert wird unterstellt, dass der Sender 4 bei der vorhergehenden Ablesung vor drei Monaten noch empfangbar war.
Diese Defektablaufzeit wird bei der Aktualisierung der Defektablaufzeit (vergleiche Verfahrensschritt R) in die Soll-Senderliste 9 eingetragen. Sollte ein Funktelegramm nach Ablauf dieser Zeit nicht empfangen worden sein, wird das Verbrauchserfassungsgerät 1 bei der Ablesung nicht mehr berücksichtigt und der Ableser von der Programmsteuerung 6 nach Empfang aller übrigen zu dieser Ableseposition gehörenden Verbrauchswerte an die nächste Ableseposition geschickt. Der Fehler wird in der Anzeige 8 angezeigt und in ein Fehlerprotokoll aufgenommen.

Mit der vorliegenden Erfindung werden also ein Verfahren und eine entsprechende Vorrichtung zur Funkfernablesung von Verbrauchserfassungsgeräten 1 mit Sendeteil 4 durch Begehung bspw. eines Gebäudes mit einer tragbaren Datenerfassungseinrichtung 2 mit Steuereinheit 5 und Empfangsteil 3 vorgeschlagen, bei dem die Datenerfassungseinheit 2 den Ableser programmgesteuert durch das Gebäude führt. Dabei kann eine Programmsteuerung 6 der Datenerfassungseinheit 2 aus den Positionen der zuletzt empfangenen Sender 4 die aktuelle Position des Ablesers im Gebäude bestimmen. Die Genauigkeit der Positionsbestimmung wird verbessert, wenn die Programmsteuerung die Empfangsfeldstärke der zuletzt empfangenen Sender 4 misst und zur Standortbestimmung des Ablesers im Gebäude heranzieht. Um nicht unnötig lange auf den Verbrauchswert eines defekten Verbraucherfassungsgerätes 1 zu warten, errechnet die Programmsteuerung 6 der Datenerfassungseinheit 2 aus bekannten Parametern eine Defektablaufzeit, wobei die Defektablaufzeit individuell für jedes sendende Gerät 1 in Empfangsreichweite geführt wird, und wobei nach Ablauf der Defektablaufzeit ohne Empfang das betroffene Gerät 1 als nicht empfangbar deklariert und für die nachfolgende programmgesteuerte Begehungsführung nicht mehr berücksichtigt wird.

Durch die erfindungsgemäße Ableserführung bei der Funkfernablesung wird die Walk-In-Ablesung durch eine zuverlässige Ablesung aller Geräte und eine höhere Begehungsgeschwindigkeit deutlich verbessert. Die Begehung kann abhängig von dem aktuellen Ableserstandort im Gebäude und abhängig von den Positionen noch nicht empfangener Erfassungsgeräte geschehen. Wartezeiten, verursacht durch defekte Sender 4, werden verkürzt, weil das Verfahren mit hoher statistischer Sicherheit diesen Tatbestand feststellen kann. Eine situationsbedingte Entscheidung wird dem Durchführenden nicht abverlangt. Durch die Auswertung der Funkstrecken kann automatisch die aktuelle Position des Ablesers im Gebäude bestimmt und nachgehalten werden. Daraus kann das Verfahren programmgesteuert eine optimale Routenplanung für den Ableser durch das Gebäude entwerfen und ständig aktualisieren. Der Ableser kann sich in allen Situationen auf die Anweisungen des Verfahrens stützen. Menschliche Fehleinschätzungen werden eliminiert und das steigert die Qualität der Ablesedienstleistung. Dies führt zu einer effizienten Durchführung der Walk-In-Ablesung mit einem intelligenten Verfahren zur Führung des Ablesers im Gebäude, bei dem keine Verbrauchserfassungsgeräte vergessen werden und der Ableseweg optimiert wird.

Das Verfahren gestattet durch die Ableserführung auch den Einsatz unerfahrener Ableser oder Hilfskräfte. In den Verfahrensregeln zum programmgesteuerten Führen des Ablesers kann das Wissen zur Funkausbreitung abhängig vom Gebäudetyp verarbeitet sein, ebenso die Expertise geübter Walk-In-Ableser und die Ergebnisse zahlreicher Funkausbreitungsmessungen in Gebäuden. Durch die automatisierte Ableserführung steht allen Ablesern das Wissen über eine vorteilhafte Vorgehensweise bei der Walk-In-Ablesung zur Verfügung und wird zur Effizienzsteigerung des Ableseprozesses genutzt.

**Bezugszeichenliste:**

| | |
|---|---|
| 1 | Verbrauchserfassungsgerät |
| 2 | mobile Datenerfassungseinheit |
| 3 | Funkempfänger |
| 4 | Sender |
| 5 | Steuereinheit |
| 6 | Programmsteuerung |
| 7 | Datenspeicher |
| 8 | Anzeigeneinheit |
| 9 | Soll-Senderliste |
| 10 | Ablaufsteuerung |
| 11 | Senderdefekt-Ausfallzeitzählung |
| 12 | Empfangsliste |
| 13 | Empfängerstandortbestimmung |
| 14 | Empfangszeitgeber |
| 15 | Auswerteeinheit |

**Patentansprüche**

**1.** Verfahren zur Funkfernablesung von mehreren Verbrauchserfassungsgeräten (1), bei dem die erfassten Verbrauchswerte ausgesendet und von einer mobilen Datenerfassungselnheit (2) bei der Begehung eines Ablesegebletes, insbesondere eines Gebäudes, empfangen werden, wobei ein Ableser von der Datenerfassungseinheit (2) anhand einer Soll-Sanderliste (9) mit der Position der abzulesenden Verbrauchserfassungsgeräte (1) im Ablesegebiet programmgesteuert durch das Ablesegebiet geführt wird, indem die Datenerfassungseinheit (2) nach dem Empfang des Verbrauchswerts eines Verbrauchserfassungsgeräts (1) unter Berücksichtigung der Soll-Senderllste (9) die nächste Ableseposition ermittelt und anzeigt, **dadurch gekennzeichnet, dass** die Verbrauchswerte von den jeweiligen Verbrauchserfassungsgeräten (1) ausgesendet werden und aus den Positionen der zuletzt empfangenen Verbrauchserfassungsgeräte (1) der aktuelle Standort des Ablesers Im Ablesegeblet bestimmt wird, wobel aus der Empfangsfeldstärke der zuletzt empfangenen Verbrauchserfassungsgeräte (1) und/oder der Empfangsrate der jeweiligen Verbrauchserfassungsgeräte (1) der aktuelle Standort des Ablesers im Ablesegebiet bestimmt wird.

2. Verfahren nach Anspruch 1, **dadurch gekennzeichnet, dass** die Ermittlung der nächsten Ableseposition von dem aktuellen Standort des Ablesers im Ablesegebiet und/oder von den Positionen der noch nicht abgelesenen Verbrauchserfassungsgeräte (1) abhängt

3. Verfahren nach einem der vorhergehenden Ansprüche, **dadurch gekennzeichnet, dass** eine Empfangsliste (12) der zuletzt empfangenen Verbrauchserfassungsgeräte (1) geführt wird, in welcher insbesondere der Empfangszeitpunkt, die Position des jeweiligen Verbrauchserfassungsgeräts (1) und/oder die Empfangsfeldstärke eingetragen werden.

4. Verfahren nach einem der vorhergehenden Ansprüche, **dadurch gekennzeichnet, dass** jeweils eine Defektablaufzeit für jedes Verbrauchserfassungsgerät (1) in Empfangsreichweite ermittelt wird, und dass nach Ablauf der Defektablaufzeit ohne Empfang das entsprechende Verbrauchserfassungsgerät (1) bei der Führung des Ablesers durch das Ablesegebiet nicht mehr berücksichtigt wird.

5. Verfahren nach einem der vorhergehenden Ansprüche, **dadurch gekennzeichnet, dass** in der Soll-Senderliste (9) für jedes Verbrauchserfassungsgerät (1) ein Empfangs-/Nichtempfangskennzelchen und/oder der Inhalt empfangener Funkbotschaften gespeichert wird.

6. Verfahren nach einem der vorhergehenden Ansprüche, **dadurch gekennzeichnet, dass** die Sender (4) der Verbrauchserfassungsgeräte (1) die Verbrauchswerte zu den erwarteten Ablesezeitpunkten mit einer erhöhten Sendehäuflgkelt aussenden.

7. Verfahren nach einem der vorhergehenden Ansprüche, **dadurch gekennzeichnet, dass** zur Führung des Ablesers durch das Ablesegebiet das erfolgreiche Ablesen eines Verbrauchserfassungsgerätes (1), ein möglicher Gerätedefekt, eine Übersicht mit den Positionen der Verbrauchserfassungsgeräte (1) sowie ggf. dem aktuellen Standort des Ablesers und/oder eine Begehungsanweisung angezeigt werden.

8. Vorrichtung zur Funkfemablesung von mehreren Verbrauchserfassungsgeräten (1) mit einer mobilen Datenerfassungseinheit (2), welche einen Funkempfänger (3), eine Steuereinheit (5) mit Programmsteuerung (6) und eine Anzeigeneinheit (8) aufweist, **dadurch gekennzeichnet, dass** die Programmsteuerung (6) zur Durchführung des Verfahrens nach einem der Ansprüche 1 bis 7 eingerichtet ist.

9. Vorrichtung nach Anspruch 8, **dadurch gekennzeichnet, dass** die Datenerfassungseinrichtung (2) eine Auswerteeinheit (15) zur Bestimmung der Empfangsfeidstärke aufweist.

10. Vorrichtung nach Anspruch 8 oder 9, **dadurch gekennzeichnet, dass** die Steuereinheit (5) ein mobiler Computer, insbesondere ein Notebook oder ein PDA, ist, an welchen ein mobiler Funkempfänger (3) anschließbar ist.

11. Vorrichtung nach einem der Ansprüche 8 bis 10, **dadurch gekennzeichnet, dass** die Steuereinheit (5) einen Datenspeicher (7) aufweist, In dem eine Soll-Senderliste (9) mit den abzulesenden Verbrauchserfassungsgeräten (1) und eine Empfangsliste (12) der zuletzt empfangenen Verbrauchserfassungsgeräte (1) gespeichert sind.

**Claims**

1. A method for radio remote reading of multiple utility meters (1), in which the recorded consumption values are transmitted and received by a mobile data acquisition unit (2) when visiting a reading location, in particular of a building, wherein a meter reader is guided through the reading location by the data acquisition unit (2) under software control on the basis of a list (9) of expected meter locations with the position of the utility meters (1) to be read in the reading location, the data acquisition unit (2) determining and displaying the next meter location after reception of the consumption value of a utility meter (1), taking into account the list (9) of expected meter locations, **characterized in that** the consumption values of the respective utility meters (1) are transmitted and the current location of the meter reader in the reading location is determined from the positions of the last received utility meters (1), wherein the current location of the meter reader in the reading location is determined from the received signal strength of the last received utility meters (1) and/or the receiving rate of the respective utility meters (1).

**2.** The method according to Claim 1, **characterized in that** the determination of the next meter location depends on the current location of the meter reader in the reading location and/or on the positions of the utility meters (1) not yet read.

**3.** The method according to any one of the preceding claims, **characterized in that** a received list (12) of the last received utility meters (1) is kept, in which in particular the receiving position, the position of the respective utility meter (1) and/or the received signal strength are entered.

**4.** The method according to any one of the preceding claims, **characterized in that** a fault timeout period is determined for each utility meter (1) in the reception range, and that if no signal is received before the expiry of the fault timeout period, the corresponding utility meter (1) is no longer taken into account in the guiding of the meter reader through the reading location.

**5.** The method according to any one of the preceding claims, **characterized in that** the list (9) of expected meter locations stores a reception/non-reception code and/or the content of received radio messages for each utility meter (1).

**6.** The method according to any one of the preceding claims, **characterized in that** the transmitters (4) of the utility meters (1) transmit the consumption values at the expected reading times with an increased sending frequency.

**7.** The method according to any one of the preceding claims, **characterized in that** to guide the meter reader through the reading location the following items are displayed: the successful reading of a utility meter (1), a possible device defect, an overview with the positions of the utility meters (1), and possibly the current location of the meter reader and or directions for finding the location.

**8.** A device for radio remote reading of multiple utility meters (1), with a mobile data acquisition device (2) having a radio receiver (3), a control unit (5) with programmable control (6) and a display unit (8), **characterized in that** the programmable control (6) for executing the method is designed according to any one of Claims 1 to 7.

**9.** The device according to Claim 8, **characterized in that** the data acquisition device (2) has an analysis unit (15) for determining the received signal strength.

**10.** The device according to Claim 8 or 9, **characterized in that** the control unit (5) is a mobile computer, in particular a notebook or a PDA, to which a mobile radio receiver (3) can be connected.

**11.** The device according to any one of Claims 8 to 10, **characterized in that** the control unit (5) has a data store (7), in which the list (9) of expected meter locations (9) with the utility meters (1) to be read and a received list (12) of the last received utility meters (1) are stored.

**Revendications**

**1.** Procédé de lecture à distance de plusieurs compteurs de consommation (1), dans lequel les valeurs de consommation détectées sont émises et reçues par une unité de détection de données (2) mobile lors du passage dans une zone de lecture, notamment d'un bâtiment dans lequel un releveur de compteur est guidé par l'unité de détection de données (2) à travers la zone de lecture de manière commandée par programme dans la zone de lecture avec la position des compteurs de consommation (1) à relever sur la base d'une liste d'émetteur de consigne (9), en ce que l'unité de détection de données (2) après la réception de la valeur de consommation d'un compteur de consommation (1) détermine et affiche la position de lecture suivante en tenant compte de la liste d'émetteur de consigne (9), **caractérisé en ce que** les valeurs de consommation sont émises par les compteurs de consommation (1) respectifs et, d'après les positions des compteurs de consommation (1) reçues en dernier, l'emplacement actuel du lecteur dans la zone de lecture est déterminé, dans lequel d'après l'intensité de champ de réception des compteurs de consommation (1) reçus en dernier et/ou le taux de réception des compteurs de consommation (1) respectifs, l'emplacement actuel du lecteur dans la zone de lecture est déterminé.

2. Procédé selon la revendication 1, **caractérisé en ce que** la détermination de la position de lecture suivante dépend de l'emplacement actuel du lecteur dans la zone de lecture et/ou des positions des compteurs de consommation (1) pas encore lus.

3. Procédé selon une des revendications précédentes, **caractérisé en ce que** une liste de réception (12) des compteurs de consommation (1) reçus en dernier est établie, dans laquelle notamment le moment de réception, la position du compteur de consommation (1) respectif et/ou l'intensité de champ de réception sont entrés.

4. Procédé selon une des revendications précédentes, **caractérisé en ce que** un temps d'expiration de panne pour chaque compteur de consommation (1) dans la portée de réception est respectivement déterminé, et **en ce que** après l'expiration du temps d'expiration de panne sans réception, le compteur de consommation correspondant (1) n'est plus pris en compte lors du guidage du releveur de compteur à travers la zone de lecture.

5. Procédé selon une des revendications précédentes, **caractérisé en ce que** dans la liste d'émetteur de cosigne (9) pour chaque compteur de consommation (1), un indicateur de réception/non réception et/ou le contenu des messages radio reçus sont mémorisés.

6. Procédé selon une des revendications précédentes, **caractérisé en ce que** les émetteurs (4) des compteurs de consommation (1) émettent les valeurs de consommation aux moments de lecture escomptés avec une fréquence d'émission accrue.

7. Procédé selon une des revendications précédentes, **caractérisé en ce que** afin de guider le releveur de compteur à travers la zone de lecture, la lecture réussie d'un compteur de consommation (1), une éventuelle panne d'appareil, une vue d'ensemble avec les positions des compteurs de consommation (1) ainsi que le cas échéant l'emplacement actuel du releveur de compteur et/ou une instruction de passage sont affichés.

8. Dispositif de lecture à distance de plusieurs compteurs de consommation (1) avec une unité de détection de données mobile (2), qui présente un récepteur radio (3), une unité de commande (5) avec commande de programme (6) et une unité d'affichage (8), **caractérisé en ce que** la commande de programme (6) est conçue afin de mettre en oeuvre le procédé selon une des revendications 1 à 7.

9. Dispositif selon la revendication 8, **caractérisé en ce que** le dispositif de détection de données (2) présente une unité d'évaluation (15) pour déterminer l'intensité de champ de réception.

10. Dispositif selon les revendications 8 ou 9, **caractérisé en ce que** l'unité de commande (5) est un ordinateur mobile, notamment un notebook ou un PDA, auquel un récepteur radio mobile (3) peut être branché.

11. Dispositif selon une des revendications 8 à 10, **caractérisé en ce que** l'unité de commande (5) présente une mémoire de données (7), dans laquelle une liste d'émetteur de consigne (9) avec les compteurs de consommation (1) à lire et une liste de réception (12) des compteurs de consommation (1) reçus en dernier sont mémorisés.

Fig. 1

**IN DER BESCHREIBUNG AUFGEFÜHRTE DOKUMENTE**

**In der Beschreibung aufgeführte Patentdokumente**

- WO 03006924 A1
- EP 0460734 A1